# EUROPÄISCHE PATENTANMELDUNG

(11) **EP 0 977 103 A1**
(43) Veröffentlichungstag der Anmeldung: **02.02.2000**
(21) Anmeldenummer: 99114581.4
(22) Anmeldetag: 26.07.1999
(51) Int. Cl.: G05D 16/20, G05D 16/06, F16K 1/32, F16K 31/12, F16K 17/20, F23N 1/02

(54) **Gas/Luft-Verhältnisdruckregler**

(30) Priorität: 29.07.1998 DE 19834000
(71) Anmelder: HONEYWELL B.V., 1101 EA Amsterdam Z.O. (NL)
(72) Erfinder: Hepping, Johan, 9412 BK Beilen (NL)
(74) Vertreter: Herzbach, Dieter, Dipl.-Ing.

(57) **Zusammenfassung**

Die Erfindung betrifft einen Gas/Luft-Verhältnisdruckregler zur Regelung des Servo-Steuerdrucks für ein servogesteuertes Gasventil.

Bei dem erfindungsgemäßen Gas/Luft-Verhältnisdruckregler sind Übersetzungsverhältnis und Offset über zwei Schiebeelemente einstellbar. Zur Einstellung des Übersetzungsverhältnisses verschiebt ein erstes Schiebeelement ein zwischen zwei Übertragungshebeln angeordnetes Koppelelement. Zur Einstellung des Offsets verändert ein zweites Schiebeelement die von einem Federelement auf einen der Übertragungshebel ausgeübte Federkraft.

## Beschreibung

Die Erfindung betrifft einen Gas/Luft-Verhältnisdruckregler zur Regelung des Servo-Steuerdrucks für ein servogesteuertes Gasregelventil gemäß dem Oberbegriff des Anspruchs 1.

Ein Gasdruckregler mit einem Servoreglermeßwerk ist aus der DE 40 01 329 A1 bekannt.

Gas/Luft-Verhältnisdruckregler dienen in erster Linie der Regulierung eines Gas/Luft-Stroms, also der Regulierung der Zusammensetzung eines einem Brenner zugeführten Gas/Luft-Gemisches. Zur Regulierung der Zusammensetzung des dem Brenner zugeführten Gas/Luft-Gemisches wird in Abhängigkeit eines Verbrennungs-Luftdrucks der Ausgangsdruck des Gases beeinflußt. Dies erfolgt dadurch, daß in Abhängigkeit des bereits erwähnten Verbrennungs-Luftdrucks das Gasregelventil stärker geöffnet bzw. stärker geschlossen wird. Das Öffnen bzw. Schließen des Gasregelventils bestimmt sich durch die auf das Gasregelventil einwirkenden Kräfte. Eine Schließkraft wird durch eine auf das Gasregelventil einwirkende Feder erzeugt, eine Öffnungskraft durch den mit Hilfe des Gas/Luft-Verhältnisdruckreglers zu regelnden Servo-Steuerdruck.

Demzufolge wird in Abhängigkeit des Verbrennungs-Luftdrucks der Servo-Steuerdruck für das Gasregelventil reguliert, wobei der Servo-Steuerdruck unmittelbar den Ausgangsdruck des Gases beeinflußt. Die Abhängigkeit zwischen dem Ausgangsdruck des Gases und dem Verbrennungs-Luftdruck wird bei bekannten Gas/Luft-Verhältnisdruckreglern durch eine lineare Kennlinie definiert, wobei die charakteristischen Kenngrößen dieser Kennlinie einerseits die Steigung und andererseits die Nullpunktverschiebung sind. Die Steigung der Kennlinie bestimmte das Übersetzungsverhältnis, und die Nullpunktverschiebung bestimmt den Offset des Gas/Luft-Verhältnisdruckreglers.

Aufgabe der vorliegenden Erfindung ist es nun, einen Gas/Luft-Verhältnisdruckregler bereitzustellen, dessen charakteristische Kenngrößen seiner Kennlinie, also dessen Übersetzungsverhältnis sowie Offset, auf einfache Weise variiert werden können.

Zur Lösung dieses Problems ist der eingangs genannte Gas/Luft-Verhältnisdruckregler durch die im kennzeichnenden Teil des Anspruchs 1 enthaltenen Merkmale weitergebildet.

Durch die Verwendung von mindestens zwei über ein Koppelelement verbundenen Übertragungshebeln sowie durch die Verwendung von mindestens zwei Schiebeelementen, die einerseits auf das Koppelelement und andererseits auf mindestens einen Übertragungshebel einwirken, lassen sich sowohl das Übersetzungsverhältnis als auch der Offset des Gas/Luft-Verhältnisdruckreglers einfach einstellen. Die konstruktive Ausgestaltung ist einfach und robust.

Vorteilhafte Ausgestaltungen der Erfindung ergeben sich aus den Unteransprüchen und der Beschreibung. Ein Ausführungsbeispiel der Erfindung wird nachfolgend anhand der Zeichnung näher erläutert. In der Zeichnung zeigen:
- Figur 1:: einen erfindungsgemäßen Gas/Luft-Verhältnisdruckregler in einer Ansicht von unten;
- Figur 2:: den Gas/Luft-Verhältnisdruckregler gemäß Figur 2 in einer ersten Seitenansicht;
- Figur 3:: den Gas/Luft-Verhältnisdruckregler gemäß Figur 1 in einer um 90° gegenüber der Seitenansicht gemäß Figur 2 gedrehten zweiten Seitenansicht;
- Figur 4:: mögliche Kennlinien des erfindungsgemäßen Gas/Luft-Verhältnisdruckreglers;
- Figur 5:: ein erstes Schiebeelement des erfindungsgemäßen Gas/Luft-Verhältnisdruckreglers in einer Ansicht von unten;

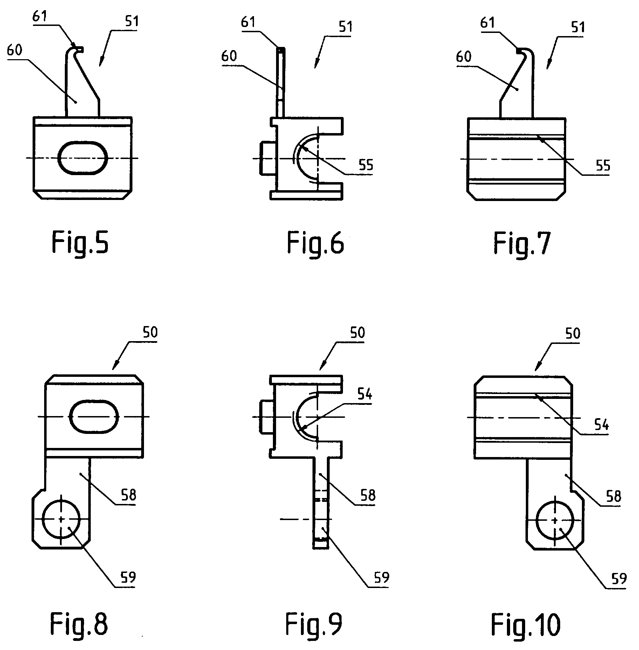

- Figur 6:: das Schiebeelement gemäß Figur 5 in Seitenansicht;
- Figur 7:: das Schiebeelement gemäß Figuren 5, 6 in einer Ansicht von oben;
- Figur 8:: ein zweites Schiebeelement des erfindungsgemäßen Gas/Luft-Verhältnisdruckreglers in einer Ansicht analog Figur 5;
- Figur 9:: das Schiebeelement gemäß Figur 8 in einer Ansicht analog Figur 6;
- Figur 10:: das Schiebeelement gemäß Figuren 8, 9 in einer Ansicht analog Figur 7;
- Figur 11:: einen ersten Übertragungshebel des erfindungsgemäßen Gas/Luft-Verhältnisdruckreglers in Draufsicht;
- Figur 12:: einen Schnitt durch den ersten Übertragungshebel gemäß der Schnittlinie XII-XII in Figur 11;
- Figur 13:: einen zweiten Übertragungshebel des erfindungsgemäßen Gas/Luft-Verhältnisdruckreglers in Draufsicht;
- Figur 14:: den Übertragungshebel gemäß Figur 13 in Seitenansicht; und
- Figur 15:: einen Schnitt durch den Übertragungshebel entlang der Schnittlinie XV-XV in Figur 13.

Der in der Zeichnung dargestellte Gas/Luft-Verhältnisdruckregler 20 wird an ein nicht-dargestelltes servogesteuertes Gasregelventil angeschlossen, dessen ebenfalls nicht-dargestellter Schließkörper durch eine nicht dargestellte Feder in Schließrichtung vorgespannt ist. Durch den auf eine nicht-dargestellte Servo-Membran des Gasregelventils einwirkenden Druck, der gegen die Kraft der genannten Feder gerichtet ist, kann das Gasregelventil geöffnet werden. Dieser Druck wird auch als Servo-Steuerdruck bezeichnet.

Der Gas/Luft-Verhältnisdruckregler 20 verfügt über eine erste Kammer 21, eine sogenannte Luft-Kammer, sowie über eine zweite Kammer 22, eine sogenannte Gas-Kammer. Die Luft-Kammer 21 ist von einer ersten Membran 23, einer sogenannten Luft-Membran, abgeschlossen. Die Gas-Kammer 22 ist von einer zweiten Membran, einer sogenannten Gas-Membran oder Regel-Membran, abgeschlossen.

Der durch die Luft-Membran 23 abgeschlossenen Luft-Kammer 21 ist über einen Zuführkanal 25 an den Verbrennungs-Luftdruck gekoppelt. Hierdurch ist gewährleistet, daß der zur Regelung des Servo-Steuerdrucks erforderliche Verbrennungs-Luftdruck in der Luft-Kammer 21 herrscht und an der Luft-Membran 23 anliegt.

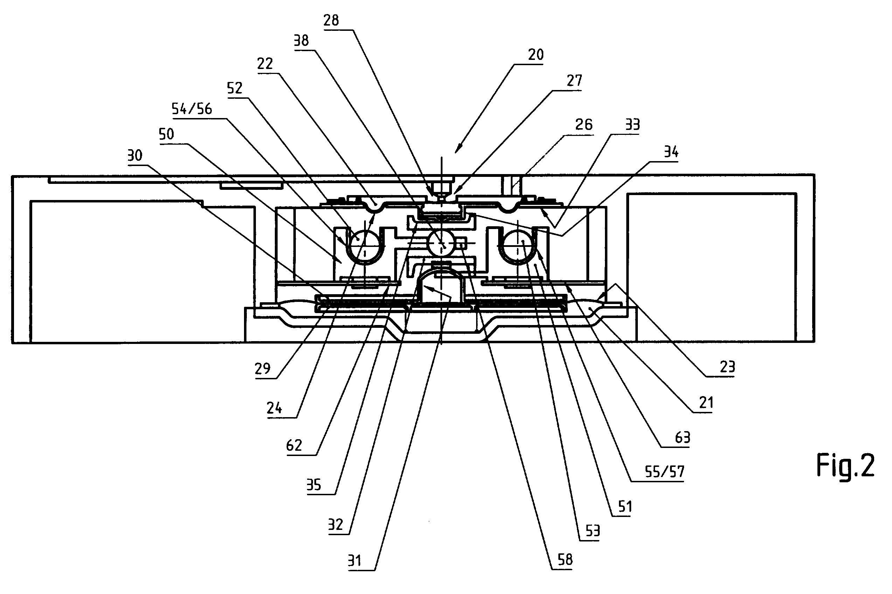

Die von der Gas-Membran 24 abgeschlossene Gas-Kammer 22 steht über einen Kanal 26 mit einer nicht-dargestellten Ausgangskammer des Gasregelventils in Verbindung. Desweiteren steht die Gas-Kammer 22 des Gas-Luft-Verhältnisdruckreglers 20 über ein Druckbegrenzungsventil 27 mit einer nicht-dargestellten Servo-Kammer des bereits erwähnten, ebenfalls nicht-dargestellten Druckregelventils in Verbindung, wobei diese Servo-Kammer von der Servo-Membran abgeschlossen wird. Das Druckbegrenzungsventil 27 wird von einem Ventilsitz 28 gebildet, der gemäß Figur 2 von der Gas-Membran bzw. Regel-Membran 24 verschlossen ist.

Die Luft-Membran 23 wird beidseitig in einem mittleren Bereich derselben von Membrantellern 29, 30 begrenzt. Der obere Membranteller 30 verfügt über einen Vorsprung 31, der mit einem ersten Übertragungshebel 32 in Kontakt steht. Die Gas-Membran 24 liegt mit einer Unterseite ebenfalls auf einem Membranteller 33 auf, der über einen Vorsprung 34 verfügt. Mit dem Vorsprung 34 steht der Membranteller 33 mit einem zweiten Übertragungshebel 35 in Kontakt.

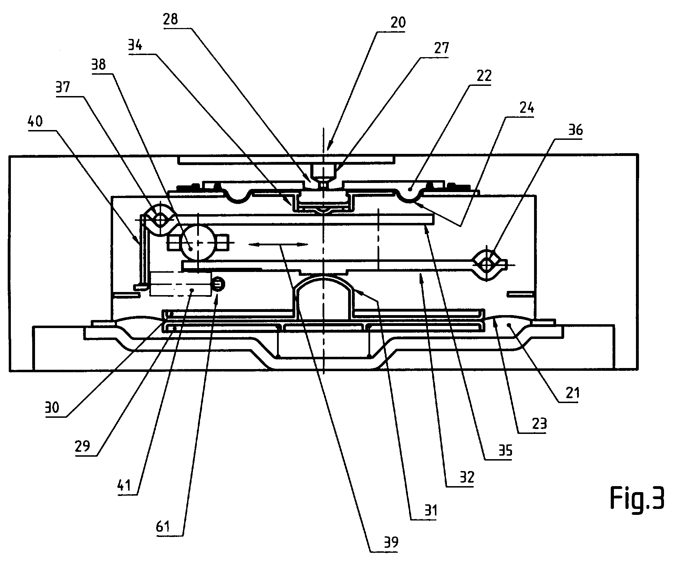

Gemäß Figur 3 sind die Übertragungshebel 32, 35 an einem Ende jeweils um eine ortsfeste Achse 36 bzw. 37 schenkbar gelagen. Gemäß Figur 3 ist der Übertragungshebel 35 an seinem linken Ende um die Achse 37 verschwenkbar, der Übertragungshebel 32 hingegen ist an seinem rechten Ende um die Achse 36 verschwenkbar.

Zwischen den Übertragungshebeln 32, 35 ist ein als Kugel ausgebildetes Koppelelement 38 angeordnet. Das als Kugel ausgebildete Koppelelement 38 steht einerseits mit der Unterseite des Übertragungshebels 35 und andererseits mit der Oberseite des Übertragungshebels 32 in Kontakt.

Mit Hilfe der Konstruktion aus den Übertragungshebeln 32, 35 und Koppelelement 38 ist der an der Luft-Membran 23 anliegende Druck auf die Gas-Membran 24 bzw. Regel-Membran 24 übertragbar. Die Position des als Kugel ausgebildeten Koppelelements 38 bestimmt hierbei das Übersetzungsverhältnis zwischen dem Ausgangsdruck des Gases und dem Verbrennungsluft-Druck. Durch eine Veränderung der Position des Koppelelements 38 in Richtung des Pfeils 39 in Figur kann das Übersetzungsverhältnis des erfindungsgemäßen Gas/Luft-Verhältnisdruckreglers 20 verändert werden. Üblicherweise liegt der Stellbereich für das Übersetzungsverhältnis zwischen 0,7:1 und 7:1.

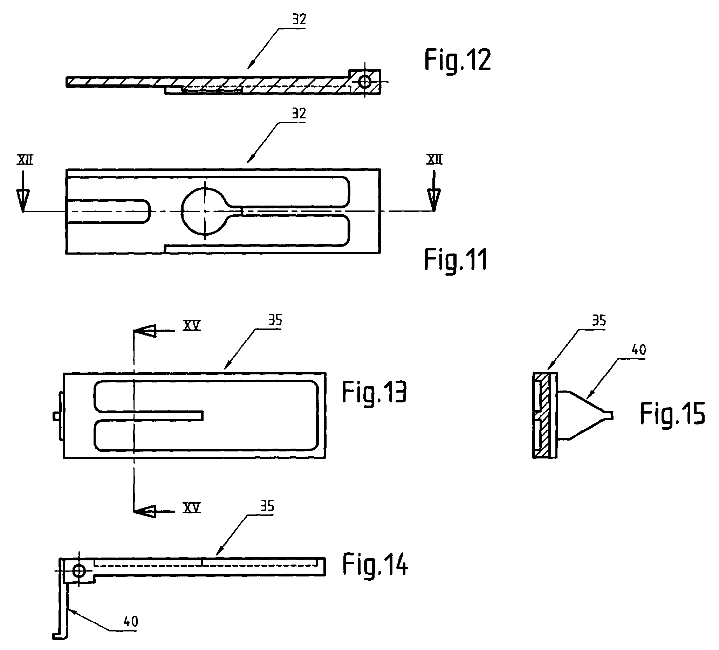

Der obere Übertragungshebel 35 verfügt gemäß Figur 3 sowie gemäß Figuren 13 bis 15 über einen nach unten gerichteten Arm 40, der gegenüber dem Übertragungshebel 35 um in etwa 90° abgewinkelt ist. An einem unteren Ende des Arms 40 liegt gemäß Figur 3 ein Federelement 41 an, welches den Offset des erfindungsgemäßen Gas/Luft-Verhältnisdruckreglers bestimmt.

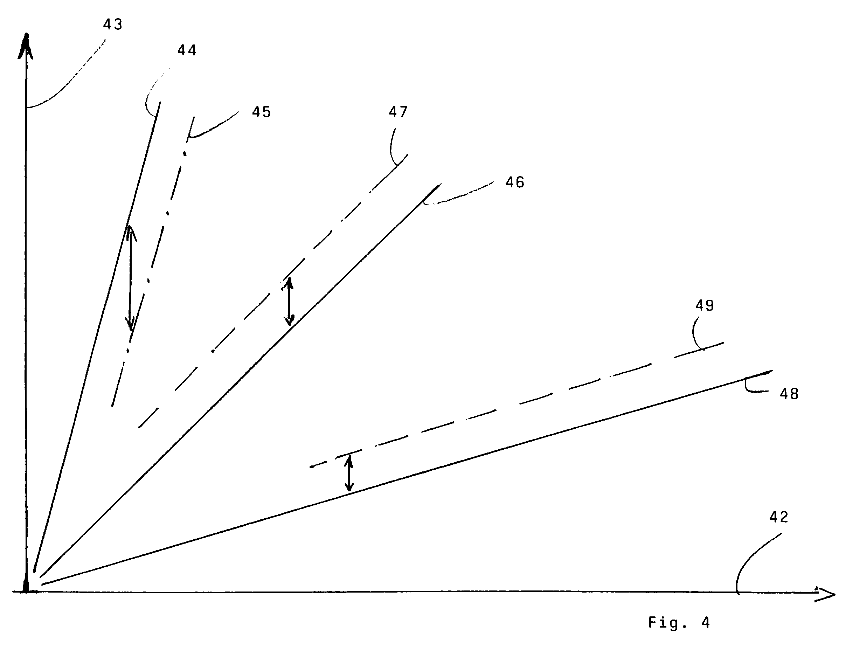

Die Auswirkungen des Übersetzungsverhältnisses sowie des Offsets für die Arbeitsweise des erfindungsgemäßen Gas/Luft-Verhältnisdruckreglers 20 können am besten den in Figur 4 gezeigten Kennlinien entnommen werden. In Figur 4 ist auf der X-Achse 42 der Verbrennungs-Luftdruck aufgetragen und auf der Y-Achse 43 der Ausgangsdruck des Gases. Figur 4 zeigt sechs verschiedene, mögliche Kennlinien 44, 45, 46, 47, 48, 49 des erfindungsgemäßen Gas/Luft-Verhältnisdruckreglers 20. Die Kennlinie 46 verfügt über eine Steigung von 1 und damit ein Übersetzungsverhältnis von 1:1. Unter diesem Übersetzungsverhältnis von 1:1 ist zu verstehen, daß bei einer Erhöhung des Verbrennungs-Luftdrucks von 1 Millibar (mbar) der Ausgangsdruck des Gases ebenfalls um 1 mbar erhöht wird. Gegenüber der Kennlinie 46 verfügt die Kennlinie 48 über eine flachere Steigung, d.h. daß zur Erzielung eines Drucksanstiegs von 1 mbar für den Ausgangsdruck des Gases gegenüber der Kennlinie 46 eine stärkere Erhöhung des Verbrennungs-Luftdrucks erforderlich ist. Dementsprechend verfügt die Kennlinie 44 gegenüber der Kennlinie 46 über eine stärkere Steigung. Demzufolge ist bei der Kennlinie 44 zur Gewährleistung eines Druckanstiegs von 1 mbar für den Ausgangsdruck des Gases eine entsprechend geringere Erhöhung des Verbrennungs-Luftdrucks notwendig als bei der Kennlinie 46. In diesem Zusammenhang sei hier angemerkt, daß die Kennlinie 48 einem Übersetzungsverhältnis von 7:1 und die Kennlinie 44 einem Übersetzungsverhältnis von 0,7:1 entspricht.

Den Kennlinien 44, 46, 48 ist gemeinsam, daß alle drei Kennlinien keine Nullpunktverschiebung, also einen Offset von 0 mbar aufweisen. Demgegenüber verfügen die Kennlinien 45, 47 sowie 49 allesamt über einen von 0 mbar abweichenden Offset, nämlich die Kennlinien 47 und 49 über einen positiven Offset und die Kennlinie 45 über einen negativen Offset.

Um nun einerseits das Übertragungsverhältnis und andererseits den Offset des Gas/Luft-Verhältnisdruckreglers sicher und einfach einstellen zu können, sind zu beiden Seiten der Übertragungshebel 35, 36 Schiebeelemente 50, 51 angeordnet, wobei jedes Schiebeelement 50, 51 auf einem entsprechenden Schaft 52, 53 verschiebbar gelagert ist. Die Schiebeelemente 50, 51 verfügen hierzu über jeweils ein Innengewinde 54 bzw. 55, die mit entsprechenden Außengewinden 56 bzw. 57 der Schafte 52 bzw 53 zusammenwirken. Durch Drehen der Schafte 52 bzw. 53 um ihre Längsachsen können die Schiebeelemente 50 bzw. 51 entlang der Schafte 52, 53 in ihrer Position verschoben werden.

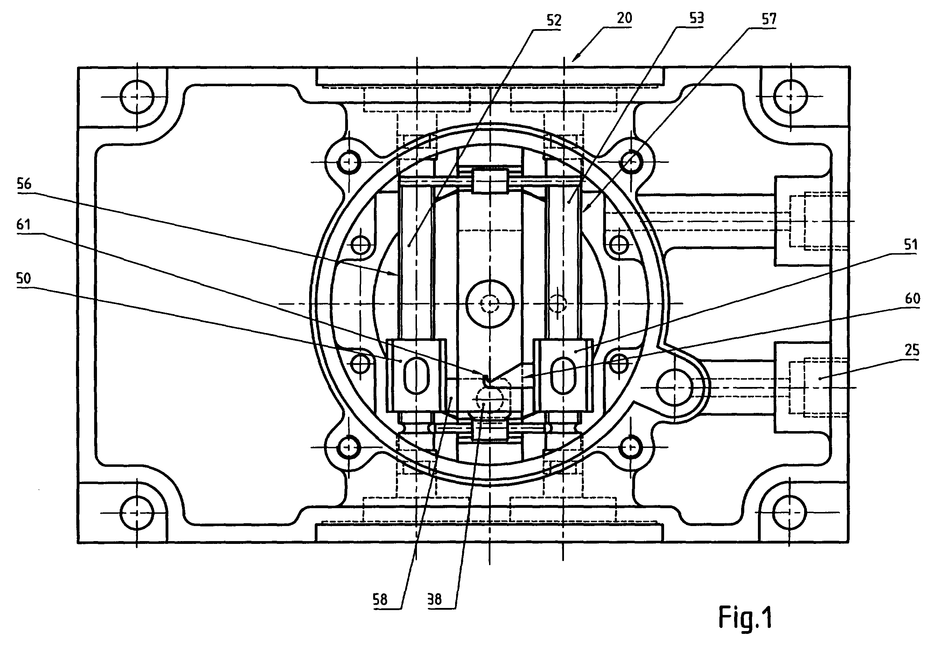

Zur Einstellung bzw. Verstellung des Übersetzungsverhältnisses dient das in Figuren 1 und 2 auf der linken Seite der Übertragungshebel 32, 35 dargestellte Schiebeelement 50. Dieses Schiebeelement 50 verfügt über einen Arm 58, der sich in die zwischen den Übertragungshebeln 32, 35 verlaufende Ebene erstreckt und der eine Ausnehmung 59 aufweist, in der das als Kugel ausgebildete Koppelelement 38 Aufnahme findet. Hierdurch ist gewährleistet, daß bei einer Verschiebung des Schiebeelements 50 entlang der Längsachse des Schaftes 52 gleichzeitig das Koppelelement 38 entlang des Pfeils 39 verschoben wird.

Die Verstellung des Offsets des erfindungsgemäßen Gas/Luft-Verhältnisdruckreglers 20 erfolgt über das in Figuren 1, 2 auf der rechten Seite der Übertragungshebel 32, 35 angeordnete Schiebeelement 51. Das Schiebeelement 51 verfügt ebenso wie das Schiebeelement 50 über einen Arm 60. Der Arm 60 ist hakenförmig mit einer äußeren Spitze 61 ausgebildet. Der Arm 60 des Schiebeelementes 51 umgreift gemäß Figur 3 das Federelement 41. Durch Verschiebung des Schiebeelements 51 entlang der Längsachse des Schafts 53 wird durch das Federelement 41 eine einstellbare Kraft auf den Arm 40 des Übertragungshebels 35 ausgeübt. Eine hohe, vom Federelement 41 auf den Arm 40 des Übertragungshebels 35 ausgeübte Kraft bewirkt, daß der Übertragungshebel 35 bereits ohne Vorhandensein eines entsprechenden Verbrennungs-Luftdrucks eine Kraft auf die Regel-Membran 24 ausübt. Daher muß ein gewisser Ausgangsdruck des Gases erzeugt werden, bevor das Druckbegrenzungsventil 27 öffnet. Demnach kann auch ohne Vorhandensein eines entsprechenden Luft-Signals ein Ausgangsdruck des Gases erzeugt werden. Dies bewirkt demnach einen positiven Offset.

Im Zusammenhang mit der Verschiebung der Schiebeelemente 50, 51 entlang der jeweiligen Schafte 52, 53 ist von Bedeutung, daß die Schiebeelemente 50, 51 an ihrer Unterseite jeweils durch Platten 62, 63 geführt sind. Die Platten bewirken, daß sich bei einer Drehung der Schafte 52, 53 die Schiebeelemente 50, 51 nicht drehen können und somit bei einer Drehung der Schafte 52, 53 eine Längsverschiebung der Schiebeelemente 50, 51 bewirkt wird.

### Bezugszeichenliste

- 20: Gas/Luft-Verhältnisdruckregler
- 21: Kammer
- 22: Kammer
- 23: Membran
- 24: Membran
- 25: Zuführkanal
- 26: Kanal
- 27: Druckbegrenzungsventil
- 28: Ventilsitz
- 29: Membranteller
- 30: Membranteller
- 31: Vorsprung
- 32: Übertragungshebel
- 33: Membranteller
- 34: Vorsprung
- 35: Übertragungshebel
- 36: Achse
- 37: Achse
- 38: Koppelelement
- 39: Pfeil
- 40: Arm
- 41: Federelement
- 42: X-Achse
- 43: X-Achse
- 44: Kennlinie
- 45: Kennlinie
- 46: Kennlinie
- 47: Kennlinie
- 48: Kennlinie
- 49: Kennlinie
- 50: Schiebeelement
- 51: Schiebeelement
- 52: Schaft
- 53: Schaft
- 54: Innengewinde
- 55: Innengewinde
- 56: Außengewinde
- 57: Außengewinde
- 58: Arm
- 59: Ausnehmung
- 60: Arm
- 61: Spitze
- 62: Platte
- 63: Platte

## Patentansprüche

1. Gas/Luft-Verhältnisdruckregler zur Regelung des Servo-Steuerdrucks für ein servogesteuertes Gasregelventil, mit einer eine Luft-Kammer (21) abschließenden ersten Membran (23), einer eine Gas-Kammer (22) abschließenden zweiten Membran (24), wobei die Gas-Kammer (24) einerseits über einen Kanal (26) mit einer Ausgangskammer des Gasregelventils und andererseits über ein Druckbegrenzungsventil (27) mit einer Servo-Kammer des Gasregelventils, in welcher der Servo-Steuerdruck herrscht, in Verbindung steht, **gekennzeichnet durch :**
a) mindestens zwei durch ein Koppelelement (38) in Verbindung stehende Übertragungshebel (32, 35), mit Hilfe derer die auf die erste Membran (23) einwirkende Kraft auf die zweite Membran (24) übertragbar ist,
b) mindestens zwei Schiebeelemente (50, 51), wobei mit Hilfe des ersten Schiebeelements (50) die Position des Koppelelements und damit das Übersetzungsverhältnis und mit Hilfe des auf ein Federelement (41) einwirkenden zweiten Schiebeelements (51) die auf einen der Übertragungshebel (32, 35) von dem Federelement (41) ausgeübte Federkraft und damit der Offset des Gas/Luft-Verhältnisdruckreglers einstellbar ist.

2. Gas/Luft-Verhältnisdruckregler nach Anspruch 1**, dadurch gekennzeichnet,** daß das erste Schiebeelement (50) sowie das zweite Schiebeelement (51) auf jeweils einem Schaft (52, 53) gelagert sind, und daß bei Drehung der Schafte (52, 53) um deren Längsachse eine Längsverschiebung der Schiebeelemente (50, 51) bewirkt wird.

3. Gas/Luft-Verhältnisdruckregler nach Anspruch 1 oder 2, **dadurch gekennzeichnet,** daß das erste Schiebeelement (50) mit einem an ihm angeordneten Arm (58) das Koppelelement (38) zumindest teilweise umfaßt, und daß bei einer Verschiebung des Schiebeelements (50) zugleich das Koppelelement (38) sich verschiebt.

4. Gas/Luft-Verhältnisdruckregler nach einem der vorhergehenden Ansprüche, **dadurch gekennzeichnet,** daß das Federelement an einem Arm (40) des zum Federelement dazugehörigen Übertragungshebels (35) anliegt.
